Europäisches Patentamt

European Patent Office

Office européen des brevets

(11) Veröffentlichungsnummer: **0 216 050 B1**

## EUROPÄISCHE PATENTSCHRIFT

(45) Veröffentlichungstag der Patentschrift: **23.10.91**

(21) Anmeldenummer: **86109802.8**

(22) Anmeldetag: **17.07.86**

Teilanmeldung 89122298.6 eingereicht am 24/08/88.

(51) Int. Cl.⁵: **A01B 29/02**, A01B 49/02, A01B 49/06

(54) **Gerätekombination für Bodenbearbeitung.**

(30) Priorität: **21.09.85 DE 3533820**

(43) Veröffentlichungstag der Anmeldung:
**01.04.87 Patentblatt 87/14**

(45) Bekanntmachung des Hinweises auf die
Patenterteilung:
**23.10.91 Patentblatt 91/43**

(84) Benannte Vertragsstaaten:
**DE FR GB NL**

(56) Entgegenhaltungen:
EP-A- 0 033 950    EP-A- 0 091 878
DE-A- 3 032 275    DE-A- 3 218 635
DE-A- 3 336 313    DE-C- 8 350
DE-U- 8 512 299    US-A- 4 489 790

(73) Patentinhaber: **Amazonen-Werke H. Dreyer
GmbH & Co. KG
Am Amazonenwerk 9-13
W-4507 Hasbergen-Gaste(DE)**

(72) Erfinder: **Gattermann, Bernd
Eichenwall 3
W-2872 Hude i. O.(DE)**
Erfinder: **Gehrke, Rudolf
Lerchenweg 1
W-2990 Papenburg 1(DE)**

## Beschreibung

Die Erfindung betrifft eine kombinierte Gerätekombination gemäß des Oberbegriffes des Patentanspruches 1.

Eine derartige Gerätekombination ist bereits durch die DE-OS 32 18 635 bekannt. Diese Offenlegungsschrift beschreibt eine aus einer Kreiselegge und einer hinter der Kreiselegge angeordneten Packerwalze bestehend Gerätekombination. Die Packerwalze dieser Gerätekombination weist innerhalb einer von quer zur Fahrtrichtung verlaufenden Stäben gebildeten Zylinderfläche druckluftbeaufschlagbare Ringe auf, so daß durch die Walkarbeit der druckluftbeaufschlagbaren Ringe eine Selbstreinigung der Bodenwalze erreicht wird. Es hat sich nun jedoch gezeigt, daß bei einer derartig ausgebil-deten Bodenwalze keine ausreichende Selbstreini-gung der Stütze, vor allem auf schweren und klebrigen Böden erreicht wird. Außerdem ist es fertigungstechnisch sehr schwer möglich, innerhalb des von den Rundstäben begrenzten zylinderförmigen Bereiches die druckluftbeaufschlagbaren Ringe anzuordnen. Des weiteren ist es sehr schwierig, diese druckluftbeaufschlagbaren Ringe, wenn sie beschädigt worden ist, auszutauschen. Außerdem wird kein asureichend gut angedrücktes Saatbett ohne Hohlräume erreicht, da die quer zur Fahrtrichtung verlaufenden Rundstäbe Bodenteile mit nach oben mitnehmen bzw. grobe Schollen umkippen, so daß Hohlräume unter diesen umgekippten Schollen entstehen. Es wird also kein gutes Saatbett geschaffen, welches dem abgelegten Saatgut optimale Keimbedingungen gewährleisten würde.

Weiterhin ist durch die deutsche Offenlegungsschrift 33 36 313 eine kombinierte Gerätekombina-tion bestehend aus einer Bodenbearbeitungsma-schine und einer hinter der Bodenbearbeitungsma-schine angeordneten Nachlaufwalze bekannt ge-worden. Bei dieser bekannten Gerätekombination sind vor der Bodenbearbeitungsmaschine in einer Reihe nebeneinander mehrere Luftreifen auf einer gemeinsamen und durchgehenden Welle gelagert, wobei sich die Luftreifen ungefähr über die ge-samte Arbeitsbreite der Gerätekombination erstrek-ken. Bei dieser Anordnung von Luftreifen ergeben sich mehrere Nachteile. Zunächst ist nachteilig bei dieser Anordnung der Luftreifen, daß sich zwischen den Luftreifen ein Erdring, vor allem auf den Stützen 7 und 8 aufbauen kann durch den die Luftreifen von ihren Felgen gedrückt werden. Außerdem ist das Austauschen bzw. Reparieren oder Flicken der Luftreifen mit einem großen Montage- bzw. Demontageaufwand verbunden, wenn die beiden mittleren Luftreifen ausgetauscht, repariert oder geflickt werden müssen, da dann jeweils sämtliche Reifen demontiert werden müssen, da die gemeinsame Welle entfernt werden muß, auf denen die Luftreifen gelagert sind.

Der Erfindung liegt nun die Aufgabe zugrunde, die eingangs beschriebene Gerätekombination für den Einsatz insbesondere auf schweren Böden zu verbessern, so daß auf sehr einfache Weise ein gut angedrücktes Saatbett ohne Hohlräume sowie ohne Verstopfungsgefahr der Nachlaufwalze erreicht wird.

Diese Aufgabe wird erfindungsgemäß durch die Maßnahmen des kennzeichnenden Teils des Patentanspruches 1 gelöst.

Infolge dieser Maßnahmen wird eine äußerst einfache Anordnung der Reifen erreicht. Hierbei ist es in einfachster Weise möglich, jeweils zwei Reifen unabhängig von den anderen Reifen zu montieren bzw. zu demontieren. Des weiteren kann sich in dem Zwischenraum zwischen den Reifen, in denen die Welle unterbrochen ist kein Boden aufbauen. Im übrigen können die Reifen in einem derartigen Abstand zueinander angeordnet werden, daß sich ein großer Freiraum ergibt, in dem sich keine Kluten zwischen den einzelnen Reifen einklemmen können. Somit kann sich auch kein Erdring zwischen den einzelnen Reifen aufbauen, die die Reifen von ihren Felgen drücken könnten. Hierdurch wird also in jedem Falle ein einwandfreies Abrollen der Reifen auf dem Boden erreicht, so daß der Boden in vorteilhafter Weise angedrückt werden kann und ein optimal angedrücktes Saatbett entsteht. Durch die Walkarbeit der Reifen wird eine automatische Reinigung der als Nachlaufwalze ausgebildeten Bodenwalze erreicht.

In einer Ausführungsform sieht die Erfindung vor, daß jeweils zwei nebeneinander angeordnete Reifen auf einem Wellenabschnitt angeordnet sind. Hierdurch ergeben sich sehr einfach montierbare bzw. demontierbare Doppelreifeneinheiten. Außerdem wird erreicht, daß jeweils nur diese Doppelreifeneinheit demontiert werden muß, wenn ein Reifen ausgetauscht bzw. repariert oder geflickt werden muß.

In vorteilhafter Weise ist dann hierbei vorgesehen, daß zwischen diesen beiden Reifen jeweils die Halterung zur Befestigung dieser Doppelreifeneinheit an dem Tragrahmen der Nachlaufwalze angeordnet ist. Hierdurch ergibt sich eine sehr vorteilhafte Anordnung der Reifen beiderseits dieser Halterung, so daß die Reifen mit ihren Felgen jeweils von der Seite her an den Wellenabschnitten befestigt werden können.

Damit sich keine Kluten zwischen den Reifen einklemmen können bzw. festsetzen können, ist erfindungsgemäß vorgesehen, daß die Reifen jeweils in einem Abstand zueinander angeordnet sein, der größer als 10 cm ist.

Um die Doppelreifeneinheiten bzw. einzelne Reifen in einfacher und leichter Weise von dem Tragrahmen der Bodenwalze lösen zu können und so die Reifen, ohne daß die gesamten Reifen demontiert werden müssen, wenn zu Reparaturzwecken einzelne Reifen gelöst werden müssen, ist erfindungsgemäß vorgesehen, daß zumindest jede zweite Halterung lös- und abnehmbar an dem Tragrahmen befestigt ist.

Damit von dem Profil der Reifen keine Kluten seitlich nach außen und so in den Zwischenraum zwischen den Reifen gedrängt werden, ist erfindungsgemäß vorgesehen, daß alle Reifen derart montiert sind, daß die Spitzen des pfeilförmigen Profils der Drehrichtung der Reifen entgegengerichtet sind.

Weitere Einzelheiten der Erfindung sind den übrigen Unteransprüchen, der Beispielsbeschreibung und den Zeichnungen zu entnehmen. Hierbei zeigen

Fig. 1    die erfindungsgemäße Bodenwalze in der Ansicht von hinten,

Fig. 2    eine erfindungsgemäße Gerätekombination mit der Bodenwalze nach Fig. 1 in der Seitenansicht und

Fig. 3    eine weitere erfindungsgemäße Gerätekombination in der Seitenansicht.

Die als Nachlaufwalze 1 ausgebildete Bodenwalze weist den Tragrahmen 2 und die nebeneinander in einer quer sich zur Fahrtrichtung erstreckenden Reihe nebeneinander angeordneten luftbereiften Reifen 3 auf. Der Tragrahmen 2 ist oberhalb der Reifen 3 angeordnet. Die Reifen 3 sind Niederdruckreifen, die sich vorzugsweise durch starke Walkarbeit selbst reinigen. Der Luftdruck in den Niederdruckreifen beträgt 0,3 bis 0,5 bar. Die Reifen 3 weisen das pfeilförmige Profil 4 auf. Hierbei sind alle Reifen 3 der Bodenwalze 1 derart montiert, daß die Spitzen 5 des pfeilförmigen Profils 4 der Drehrichtung 6 der Reifen entgegengesetzt gerichtet sind. Die Bodenwalze 1 ist über die Tragarme 7 hinter den Bodenbearbeitungswerkzeugen 8 der als Kreiselegge 9 ausgebildeten Bodenbearbeitungsmaschine angeordnet. Die Bodenwalze 1 und die Kreiselegge 9 bilden die kombinierte Gerätekombination. Diese Gerätekombination ist über die Dreipunktkupplungselemente, die sich auf der Vorderseite der Kreiselegge 9 befinden, an den Dreipunktkraftheber eines nicht dargestellten Schleppers anzuschließen.

Die Bodenwalze 1 bestimmt die Eindringtiefe der Bodenbearbeitungswerkzeuge 8 der Kreiselegge 9 in den Boden, da sich die Kreiselegge 9 über die einstellbaren Anschläge 11 über die Tragarme 7 auf der Bodenwalze 1 abstützt.

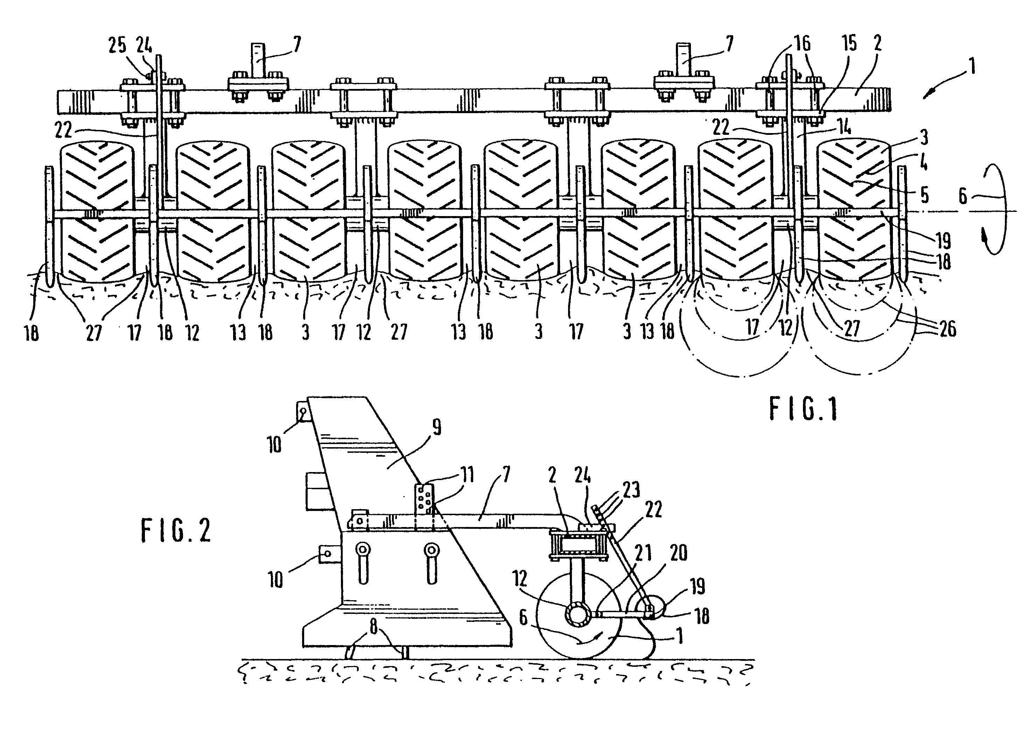

Die Bodenwalze 1 besteht aus den jeweils mit einem Abstand nebeneinander angeordneten luftbereiften Reifen 3. Bei der Bodenwalze gemäß der Fig. 1 sind jeweils zwei Reifen nebeneinander auf dem Wellenabschnitt 12 angeordnet. Die Reifen 3 sind jeweils auf den Wellenabschnitten 12 drehbar gelagert. Somit ist also die aus den Wellenabschnitten 12 bestehende Welle, auf denen die Reifen gelagert sind, nach jedem zweiten Reifen 3 unterbrochen. Somit ergibt sich also nach jedem zweiten Reifen der freie Zwischenraum 13 jeweils zwei Reifen 3. Die Wellenabschnitte 12, auf denen die Reifen 3 drehbar gelagert sind, sind feststehend angeordnet. An den Wellenabschnitten 12 ist jeweils die Halterung 14 befestigt. Diese Halterung 14 weist auf ihrer Oberseite jeweils die Flanschplatte 15 auf, über welche die Halterung 14 und somit der Wellenabschnitt 12 mit den beiden Reifen 3 mit den Schrauben 16 an den Tragrahmen 2 seitlich ein- und verstellbar angeordnet sind. Der Zwischenraum 13 bzw. 17 zwischen den Reifen 3 beträgt jeweils zumindest 4 cm. Über die Flanschplatten 15 und die Schrauben 16 ist der Wellenabschnitt 12 mit den Reifen 3 lös- und abnehmbar an dem Tragrahmen 2 befestigt.

Hinter der Bodenwalze 1 sind in dem Bereich der Zwischenräume 13 und 17 jeweils die Striegelzinken 18 angeordnet. Des weiteren ist jeweils ein Striegelzinken 18 hinter der Bodenwalze 1 in dem Bereich seitlich neben dem äußeren Bereich des äußeren Reifens 3 angeordnet. Die Striegelzinken 18 sind an dem Querbalken 19 befestigt, der mittels der Streben 20 an den Wellenabschnitten 12 mittels der Gelenke 21 angelenkt ist. Des weiteren sind an den Querbalken 19 noch die Einstellstreben 22 angeordnet. Diese Einstellstreben 22 weisen auf ihrer Oberseite mehrere übereinander angeordnete Löcher 23 auf. Des weiteren ist an dem Tragrahmen 2 die Einstellplatte 24 angeordnet, die einen Bolzen 25 aufweist, so daß die jeweilige Einstellstrebe 22 über die Löcher 23 auf diesen Bolzen 25 eingehängt werden kann. Somit kann der Querbalken 19 derart in der Höhe verstellt werden, so daß die Striegelzinken 18 zentral in der Höhe bzw. in ihrer Eingriffstiefe in den Boden eingestellt werden können.

Im folgenden soll die Funktion der erfindungsgemäßen Gerätekombination, insbesondere die Funktionsweise der Bodenwalze 1 näher erläutert werden:

Durch die Gerätekombination, die aus der Kreiselegge 9 und der aus den Reifen 3 zusammengesetzten Bodenwalze 1 besteht, soll in einem Arbeitsgang der Boden durch die Kreiselegge 9 gekrümelt und durch die Bodenwalze 1 rückverfestigt werden, so daß ein Saatbett mit einer optimalen Krümelstruktur, entsteht. Die Bodenbearbeitungswerkzeuge 8 der Kreiselegge 9 zerschlagen die groben Kluten und erzeugen eine Krümelstruktur wenn die Kreiselegge 9 soweit abgesenkt wird, daß die Bodenbearbeitungswerkzeuge 8 in den Boden eindringen. Durch die Reifen 3 der Bodenwalze 1 wird der Boden, der von den Bodenbearbeitungswerkzeugen 8 der Kreiselegge 9 gelockert worden ist, wieder rückverfestigt, so daß unterhalb der einzelnen Reifen die nur unter den beiden äußeren rechten Reifen 3 in der Fig. 1 dargestellten Druckzwiebeln 26 erzeugt werden. Direkt in der Spur der Reifen 3 wird der Boden in der obersten Bodenschicht stärker angedrückt als in den Zwischenräumen 13 und 17 als zwischen den Reifen 3, so daß in den Zwischenräumen 13 und 17 ein Erdwall 27 unverfestigter bzw. lockerer krümliger Boden etwas erhöht gegenüber der Laufradspur der Reifen 3 zurückbleibt. Diese Erde des Erdwalles 27 wird durch die Striegelzinken 18 seitlich verteilt bzw. zur Seite in die Laufradspuren der Reifen 3 geworfen, so daß die Laufradspur der Reifen 3 mit einer krümeligen Bodenschicht bedeckt wird. Hierdurch entsteht ein optimales Saatbett.

Durch die großen Zwischenräume 13 bzw. 17 zwischen den nebeneinander angeordneten Reifen 3 können sich keine Kluten zwischen den Reifen 3 einklemmen bzw. kann sich keine Erdschicht bzw. keine Erdscheibe in diesen Zwischenräumen 13 und 17 aufbauen, die die Reifen 3 von ihren Felgen drücken würden. Des weiteren sind Reifen so mit dem pfeilförmigen Profil 4 so montiert, daß die Spitzen 5 des pfeilförmigen Profils der Reifen 3er Drehrichtung 6 der Reifen 3 entgegengerichtet sind. Hierdurch werden die Kluten nicht in Richtung der Zwischenräume 13 und 17 zwischen die Reifen gefördert, sondern vielmehr zur Mitte der Reifen 3 gedrückt, so daß sie dann in der Mitte der Laufradspur von den Reifen 3 abfallen. Somit können also die von den Reifen 3 mitgenommenen Kluten nicht in die Zwischenräume 13 bzw. 17 zwischen die Reifen 3 gelangen. Des weiteren wird ein Aufbau eines Erdringes in dem Zwischenraum 13 zwischen den Reifen 3 schon dadurch vermieden, daß dieser Zwischenraum 13 von keinem Bauteil gestört ist bzw. nicht von einer Welle durchsetzt wird. Der Aufbau einer Erdscheibe in dem Zwischenraum 17 zwischen den Reifen 3 wird dadurch verhindert, daß der Wellenabschnitt 12 feststeht und somit sich nicht mitdreht. Somit kann sich auf den Wellenabschnitt 12 kein umlaufender Erdring aufbauen.

Von entscheidender Bedeutung der verstopfungsfreien Arbeit der Bodenwalze 1 ist es also, daß in dem Zwischenraum 13 keine umlaufende Welle bzw. auch keine feststehende Welle sich befindet, da die Kluten in diesen Zwischenraum 13 frei durchfallen können. Des weiteren ist von entscheidender Bedeutung, daß in dem Zwischenraum 17 zwischen den Reifen 3 ebenfalls keine umlaufende Welle sich befindet, so daß sich keine umlaufende Erdscheibe zwischen den Reifen 3 aufbauen kann, der die Reifen von ihren Felgen drükken bzw. den Zwischenraum 17 verstopfen würde. Evtl. von den Reifen 3 in den Zwischenraum 17 eingeklemmte Kluten werden von der Halterung 14 aus dem Zwischenraum zwischen den Reifen 17 entfernt bzw. von der Halterung 14 zerkrümelt.

Die von den Laufrädern 3 durch das Andrücken des Bodens verfestigte Bodenschicht gebildet einen verdichteten Horizont, der gleichzeitig Saatablagehorizont ist, so daß das Saatgut, wie von den Ackerbauern gefordert, auf einer etwas angedrückten Erdschicht abgelegt wird, so daß das Saatgut Anschluß an die wasserführende Schicht des Bodens erhält. Abgedeckt wird das auf diesem verdichteten Horizont abgelegte Saatgut durch eine Schicht lockeren Boden, der im wesentlichen durch das Verteilen der Erde des Erdwalles 27 zwischen den Reifen 3 durch die Striegelzinken 18 erzeugt worden ist.

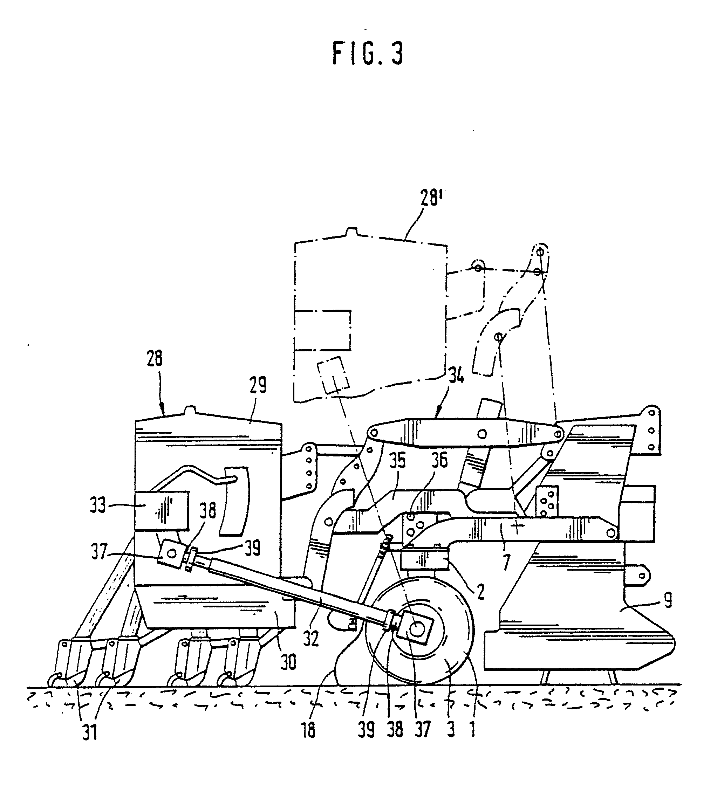

Die Gerätekombination gemäß Fig. 3 unterscheidet sich von der Gerätekombination gemäß Fig. 2 dadurch, daß sie zusätzlich zu dem Kreiselgrubber 9 und der Bodenwalze 1 noch eine hinter der Bodenwalze 1 angeordnete Sämaschine 28 aufweist. Die Sämaschine 28 weist den Vorratsbehälter 29 und den laufradlosen Rahmen 30 auf. An dem Rahmen 30 sind die Säschare 31 in aufrechter Ebene schwenkbar angeordnet. Weiterhin weist die Sämaschine 28 die nicht dargestellten Dosierorgane, die vor dem unteren Bereich des Vorratsbehälters 29 angeordnet sind, auf. Die Dosierorgane werden von den Reifen 3 der Bodenwalze 1 über das Schiebeprofilrohr 32 und über das Regelgetriebe 33 angetrieben.

Die Sämaschine 28 st mittels des hydraulischen Hubrahmens 34 hinter der Nachlaufwalze angeordnet. Die Unterlenker 35 stützen sich in Sästellung der Sämaschine 28 auf den höhenverstellbaren Anschlägen 36, die auf dem Tragrahmen 2 der Bodenwalze 1 angeordnet sind, ab. Über den hydraulischen Hubrahmen 34 kann die Sämaschine in die mit strichpunktierten Linien angedeutete Stellung 28' zum Wenden am Feldende angehoben werden.

Zum Antrieb des Regelgetriebes 33 über das Schiebeprofilrohr 32 ist jeweils ein Winkelgetriebe 37, wovon je eines auf der Wellenachse der Reifen 3 und der Antriebswelle des Regelgetriebes 33 schwenkbar angeordnet ist. Weiterhin ist jeweils zwischen dem Schiebeprofilrohr 32 und den Wellen 38 jeweils die elastische Kupplung 39 angeordnet, die kleine Fluchtfehler der Wellen 38 der Winkelgetriebe 37 ausgleicht.

Durch die Gerätekombination gemäß Fig. 3 kann also in einem Arbeitsgang der Boden durch die Kreiselegge 9 gelockert und durch die Reifen 3 der Bodenwalze angedrückt werden, so daß ein optimales Saatbett entsteht und gleichzeitig über die Säschare 31 der Sämaschine 28 das Saatgut im Boden abgelegt werden.

**Patentansprüche**

1. Kombinierte Gerätekombination, bestehend aus einer Bodenbearbeitungsmaschine (9) und einer hinter der Bodenbearbeitungsmaschine (9) angeordneten Nachlaufwalze (1), die die Eindringtiefe der Bodenbearbeitungswerkzeuge (8) der Bodenbearbeitungsmaschine (9) in den Boden bestimmt und auf der sich das Gewicht der Bodenbearbeitungsmaschine (9) während des Bodenbearbeitungsvorganges abstützt, wobei die Nachlaufwalze (1) druckluftbeaufschlagbare Ringe (3) aufweist, dadurch gekennzeichnet, daß die Nachlaufwalze (1) aus nebeneinander angeordneten Reifen (3) besteht, daß die Reifen (3) auf Wellen (12) gelagert sind, und daß diese Wellen (12) nach jedem zweiten Reifen (3) unterbrochen sind.

2. Gerätekombination nach Anspruch 2, dadurch gekennzeichnet, daß zwischen diesen beiden Reifen (3) jeweils die Halterung (14) zur Befestigung an dem Tragrahmen (2) der Nachlaufwalze (1) angeordnet ist.

3. Gerätekombination nach Anspruch 1, dadurch gekennzeichnet, daß die Reifen (3) jeweils in einem Abstand zueinander angeordnet sind, der größer als 10 cm ist.

4. Gerätekombination nach Anspruch 3, dadurch gekennzeichnet, daß zumindest jede zweite Halterung (14,42) lös- bzw. abnahmbar befestigt ist.

5. Gerätekombination nach Anspruch 1, dadurch gekennzeichnet, daß alle Reifen (3) derart montiert sind, daß die Spitzen (5) des pfeilförmigen Profils (4) der Drehrichtung (6) der Reifen (3) entgegengerichtet sind.

## Claims

1. A combined implement assembly comprising a soil cultivating machine (9) and a follow-on roller (1) located behind the soil cultivating machine, said follow-on roller (1) determining the depth of penetration of the cultivating tools (8) of the cultivating machine (9) into the soil, and upon which the weight of the soil cultivating machine (9) is supported during the soil cultivation process, the follow-on roller (1) having rings (3) chargeable with compressed air, characterised in that the follow-on roller (1) consists of tyres (3) located one next to the other, that the tyres (3) are mounted on shafts (12), and that these shafts (12) are interrupted after each second tyre (3).

2. A combined implement assembly according to Claim 2, characterised in that the securing means (14) for attaching to the carrier frame (2) of the follow-on roller (1) are in each case located between these two rollers (3).

3. A combined implement assembly according to Claim 1, characterised in that the tyres (3) are each disposed at a distance from one another which is greater than 10 cm.

4. A combined implement assembly according to Claim 3, characterised in that at least every second securing means (14, 42) is releasably or removably attached.

5. A combined implement assembly according to Claim 1, characterised in that all the tyres (3) are mounted in such a way that the points (5) of the arrow-shaped tread pattern (4) are directed opposite to the direction of rotation (6) of the tyres (3).

## Revendications

1. Ensemble combiné d'outils comprenant une machine (9) pour le travail du sol et en aval de cette machine (9), un rouleau suiveur (1) qui détermine la profondeur de pénétration des outils (8) de la machine (9) pour le travail du sol, dans le sol, et qui reçoit le poids de la machine (9) pendant le travail du sol, le rouleau suiveur (1) comportant des anneaux (3) soumis à l'action de l'air comprimé, ensemble caractérisé en ce que le rouleau suiveur (1) se compose de pneumatiques (3) disposés les uns à côté des autres, ces pneumatiques (3) étant montés sur des axes (12) et ces axes (12) sont interrompus après chaque second pneumatique (3).

2. Ensemble combiné d'outils selon la revendication 1, caractérisé en ce qu'entre les deux pneumatiques (3) se trouve chaque fois le support (14) pour la fixation du rouleau (1) sur le châssis de support (2).

3. Ensemble combiné d'outils selon la revendication 1, caractérisé en ce que les pneumatiques (3) sont disposés à une distance relative supérieure à 10 cm.

4. Ensemble combiné d'outils selon la revendication 3, caractérisé en ce qu'au moins chaque second support (14, 42) est fixé de façon détachable ou amovible.

5. Ensemble combiné d'outils selon la revendication 1, caractérisé en ce que tous les pneumatiques (3) sont montés pour que les pointes (5) du profil en forme de flèche (4) soient opposées au sens de rotation (6) des pneumatiques (3).

FIG.1

FIG.2

EP 0 216 050 B1

# FIG. 3